# EUROPÄISCHE PATENTANMELDUNG

(11) **EP 1 248 358 A1**
(43) Veröffentlichungstag der Anmeldung: **09.10.2002**
(21) Anmeldenummer: 02005699.0
(22) Anmeldetag: 13.03.2002
(51) Int. Cl.: H02P 6/08, H02P 6/10

(54) **Elektronisch kommutierter Elektromotor**

(30) Priorität: 06.04.2001 DE 10117252
(71) Anmelder: ROBERT BOSCH GMBH, 70442 Stuttgart (DE)
(72) Erfinder: Mohr, Thomas, 77830 Bühlertal (DE); Koch, Stefan, 77855 Achern (DE)

(57) **Zusammenfassung**

Die Erfindung geht von einem elektronisch kommutierten Elektromotor (10) mit einem durch Dauermagnete erregten Rotor (12) und mit einem Stator aus, dessen Wicklungen (18, 20) in einem niederfrequenten Takt durch eine Steuerelektronik (30) in Abhängigkeit von der Stellung des Rotors (12) bestromt werden, die von einer Kommutierungserkennung (32) erfasst wird. Es wird vorgeschlagen, dass die Steuerelektronik (30) zur Regelung des Elektromotors (10) einzelne Bestromungsperioden der zu bestromenden Wicklungen (18, 20) je Zeiteinheit unterdrückt.

## Beschreibung

### Stand der Technik

Die Erfindung geht von einem elektronisch kommutierten Elektromotor nach dem Oberbegriff des Anspruchs 1 aus.

Bekannte Elektromotoren mit elektronischer Kommutierung bestehen aus einem Rotor, der mit Permanentmagneten bestückt ist, und aus einem Stator, in welchem die elektrischen Wicklungen eingebracht sind. Im Kraftfahrzeug liegen Einsatzgebiete in den Bereichen Lüftung/Klima sowie bei Pumpen- und Verstellantrieben. Die Wicklungen des Stators werden in einer vom verwendeten Wicklungsschema vorgegebenen Reihenfolge bestromt. Dadurch bildet sich zu jedem Zeitpunkt ein aus dem Stromfluss resultierendes magnetisches Drehfeld aus. Aus der abweichenden Winkellage des permanenten Rotorfelds zum Statorfeld entsteht das Drehmoment und der Rotor wird in Richtung des Statorfelds gedreht. Die konstante Drehbewegung wird durch eine gezielte Ansteuerung der Wicklungen des Stators erzeugt. Die Art der Ansteuerung bestimmt die Drehrichtung und die Drehzahl ergibt sich aus dem Lastmoment und dem Motordrehmoment, von der Größe des eingespeisten Stromes abhängig.

Der elektronisch kommutierte Elektromotor wird aus einem Gleichspannungsnetz versorgt, wobei die Ansteuerung der Wicklungen des Stators über elektronische Leistungsschalter erfolgt. Diese werden von einer Steuerelektronik, die in der Regel einen Mikrocontroller besitzt, in Abhängigkeit von der Lage des Rotors angesteuert. Eine Kommutierungserkennung, die in der Regel einen Hallsensor umfasst, ermittelt die aktuelle Stellung des Rotors und der mit ihm verbundenen Permanentmagnete. Solche Elektromotoren sind z.B. im Kraftfahrtechnischen Taschenbuch / Bosch, 23. Auflage, Viehweg Verlag Braunschweig, Seite 134 beschrieben. Es ist auch eine sensorlose Methode zum Erfassen der Stellung des Rotors bekannt, wobei die durch die Drehung des. Rotors induzierte Spannung in einer momentan nicht durch die Leistungselektronik bestromten Wicklung ausgewertet wird.

Zur Regelung des bekannten Elektromotors wird die Versorgungsspannung mit einer hohen Frequenz von ca. 15000 Hz getaktet und die so entstehenden Spannungsimpulse in ihrer Pulsweite moduliert. Die hochfrequenten Schwingungen, deren Frequenz über dem Höhrbereich liegt, können benachbarte Kommunikationssysteme im Fahrzeug nachhaltig stören, weil sie von der Frequenz und Amplitude her in deren Nutzbereich liegen und direkt vom Sensor des Kommunikationssystems, der Antenne, aufgefangen über die Antennenleitung eingekoppelt werden können. Es sind daher Maßnahmen zur elektromagnetischen Verträglichkeit (EMV) und Funkenentstörung zu treffen. So werden zum Glätten der Versorgungsspannung meistens große Kapazitäten vorgesehen, um den nationalen und internationalen Normen, wie:
DIN 40839 Teil 1, ISO 7637 -0/-1/-2
DIN 40839 Teil 3, ISO 7637 -3
DIN 40839 Teil 4, ISO 11451/11452, ISO/TR 10605
sowie den Forderungen der Kraftfahrzeughersteller zu genügen.

Aus der DE 2949947 C2 ist eine Schaltungsanordnung zum Steuern und Regeln eines kollektorlosen Elektromotors mit einem permanentmagnetischen Läufer bekannt. Ein Stator des Elektromotors weist zwei zu bestromende Wicklungen auf, von denen eine zur Erhöhung des Drehmoments nur während der Startphase und eines Betriebszustandes bestromt wird, bei dem die Drehzahl des Elektromotors unter einen vorgegebenen Wert abfällt. Einzelne Bestromungsperioden der zu bestromenden Wicklungen werden nicht unterdrückt.

### Vorteile der Erfindung

Nach der Erfindung unterdrückt die Steuerelektronik zur Regelung des Elektromotors einzelne Bestromungsperioden der zu bestromenden Wicklungen des Stators je Zeiteinheit. Durch die Wiederholungsfrequenz der ausgelassenen Bestromungsperiode, die im Nennbetrieb des Elektromotor mit 3000 U/min und einer Kommutierungsfrequenz von ca. 400 Hz etwa 2,5 Millisekunden beträgt, wird der mittlere Stromfluss durch eine Wicklung je Zeiteinheit verringert, ohne dass die Wicklung ganz abgeschaltet wird. Somit kann die Drehzahl des Elektromotors bei einem gegebenen Lastmoment gezielt verstellt werden. Auf Grund der Massenträgheit des Rotors läuft der Elektromotor mit reduzierter Drehzahl trotz der ungleichmäßigen Bestromung der einzelnen Wicklung gleichmäßig weiter. Auf eine hochfrequente Taktung des Stroms und die dadurch erforderlichen EVM-Massnahmen kann verzichtet werden. Dabei ist es zweckmäßig, unter Berücksichtigung von ohmschen Verlusten die durch Induktion entstehenden Spannungspitzen an Schaltflanken beim Abschalten des Stroms durch ohmsche Widerstände zu verschleifen. Dies ist auf Grund der relativ geringen Leistung und des nicht zu häufigen Auftretens ohne Schaden möglich. Zudem erhöht der Wegfall von Entstörschaltungen, wie sie im hochfrequenten Bereich erforderlich wären, die Zuverlässigkeit, da ein Ausfall oder ein Nachlassen der Wirkung der Entstörschaltung, was der Anwender oft nicht bemerkt, ausgeschlossen ist.

Die höchste Kommutierungsfrequenz ergibt sich aus der höchsten Betriebsdrehzahl. Sie liegt um etwa dem Faktor vierzig unter der üblichen Pulsfrequenz der Versorgungsspannung. Im Übrigen wird das Prinzip des Elektromotors beibehalten, nach dem die Stellung des Rotors gemessen und daraus der tatsächliche Kommutierungszeitpunkt ermittelt wird.

Um den Gleichlauf des Elektromotors zu gewährleisten, werden in vorteilhafter Weise die unterdrückten Bestromungsperioden gleichmäßig über den Regelzeitraum verteilt, so dass jede n-te Bestromungsperiode entfällt, z.B. jede zehnte Periode. Also kann n eine beliebige ganze Zahl größer eins sein. Bei einem mehrphasigen, insbesondere zweiphasigen Elektromotor sollten die einzelnen Bestromungsperioden abwechselnd auf die einzelnen zu bestromenden Wicklungen verteilt unterdrückt werden. Damit wird abwechselnd einer der beiden Schaltglieder entlastet, so dass sich eine gleiche Wärmebelastung und ein ausgeglichener Verschleiß ergeben. Ferner wird auch bei reduzierter Drehzahl ein symmetrisches Drehfeld und eine gleichmäßige Temperaturverteilung erzielt.

### Zeichnung

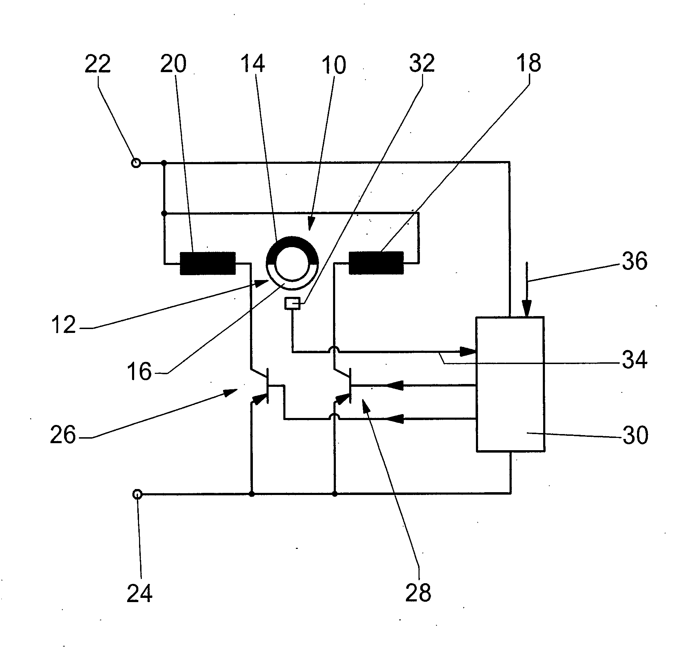

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Die einzige Zeichnung zeigt eine schematische Darstellung eines elektronisch kommutierten Elektromotors.

### Beschreibung der Ausführungsbeispiele

Ein elektrisch kommutierter Gleichstrommotor 10 besitzt einen Rotor 12 mit Permanentmagneten, die diametral zur Rotationsachse einen Nordpol 14 und einen Südpol 16 ausbilden. Im Stator des Elektromotors 10 befinden sich zwei Wicklungen 18, 20, die an einer Gleichspannung zwischen einem positiven Stromanschluss 22 und einem negativen Stromanschluss 24 angeschlossen sind und im Falle der Bestromung ein Magnetfeld in axialer Richtung der Wicklungen 18, 20 aufbauen. Die Wicklungen 18, 20 werden wechselweise durch eine Steuerelektronik 30 über Leistungsschalter 26 bzw. 28 angesteuert und bestromt. Die Steuerelektronik 30 mit einem Mikrocontroller wertet zwei Eingangssignale 34, 36 aus. Aus dem Eingangssignal 34, das von einer Kommutierungserkennung in Form eines Hallsensors 32 erzeugt wird, ergibt sich die Lage des Rotors 12 und damit die Position der beiden Pole 14 und 16. Daraus ermittelt die Steuerelektronik 30 den für den Motorbetrieb notwendige Kommutierungszustand. Gleichzeitig liefert die Änderungsgeschwindigkeit des Eingangssignals 34 eine Aussage über die momentane Drehzahl des Rotors 12. Diese Istdrehzahl wird durch die Steuerelektronik 30 mit dem zweiten Eingangssignal 34 verglichen, welches die gewünschte Solldrehzahl vorgibt. Stimmen die beiden Drehzahlen überein, dann werden die Leistungsschalter 26, 28 entsprechend dem erkannten Kommutierungszustand und ohne Änderung von Bestromungsperioden angesteuert. Eine Differenz zwischen Sollund Istdrehzahl wird durch die Steuerelektronik 30 mit einer entsprechenden Erhöhung bzw. Reduzierung der Anzahl der Bestromungsperioden der zu bestromenden Wicklungen 18, 20 ausgeglichen. Aus Symmetriegründen bezüglich der Wärmebelastung für die Leistungsschalter 26, 28 und die Wicklungen 18, 20 sowie die Drehmomentausbildung werden einige Bestromungsperioden abwechselnd auf die einzelnen zu bestromenden Wicklungen 18, 20 verteilt unterdrückt.

Bezugszeichen
- 10: Elektromotor
- 12: Rotor
- 14: Pol
- 16: Pol
- 18: Wicklung
- 20: Wicklung
- 22: Stromanschluss positiv
- 24: Stromanschluss negativ
- 26: Leistungsschalter
- 28: Leistungsschalter
- 30: Steuerelektronik
- 32: Kommutierungserkennung
- 34: Eingangssignal
- 36: Eingangssignal

## Patentansprüche

1. Elektronisch kommutierter Elektromotor (10) mit einem durch Dauermagnete erregten Rotor (12) und mit einem Stator, dessen Wicklungen (18, 20) in einem niederfrequenten Takt durch eine Steuerelektronik (30) in Abhängigkeit von der Stellung des Rotors (12) bestromt werden, die von einer Kommutierungserkennung (32) erfasst wird, **dadurch gekennzeichnet, dass** die Steuerelektronik (30) zur Regelung des Elektromotors (10) einzelne Bestromungsperioden der zu bestromenden Wicklungen (18, 20) je Zeiteinheit unterdrückt.

2. Elektromotor nach Anspruch 1, **dadurch gekennzeichnet, dass** jede n-te Bestromungsperiode entfällt, wobei n eine ganze Zahl größer eins ist.

3. Elektromotor nach Anspruch 2, **dadurch gekennzeichnet, dass** einzelne Bestromungsperioden der zu bestromenden Wicklungen (18, 20) abwechselnd auf die Wicklungen (18, 20) verteilt unterdrückt werden.

4. Elektromotor nach einem der vorhergehenden Ansprüche, **dadurch gekennzeichnet, dass** die Schaltflanke beim Abschalten des Stroms durch einen ohmschen Widerstand der Schaltglieder verschliffen wird.
